(19)

**Europäisches Patentamt**
**European Patent Office**
**Office européen des brevets**

(11) **EP 4 148 518 A1**

(12) **EUROPEAN PATENT APPLICATION**

(43) Date of publication:
**15.03.2023 Bulletin 2023/11**

(21) Application number: **21196231.1**

(22) Date of filing: **13.09.2021**

(51) International Patent Classification (IPC):
***G05B 23/02*** *(2006.01)*

(52) Cooperative Patent Classification (CPC):
**G05B 23/024**; G05B 2219/2614

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **EVER_EST Srl**
**33170 Pordenone (IT)**

(72) Inventors:
• **Ceccolin, Pierluigi**
**35136 Padova (IT)**
• **Peterle, Fabio**
**32016 Alpago (Belluno) (IT)**

(74) Representative: **De Tullio, Michele Elio**
**Viale Liegi, 48/b**
**00198 Roma (IT)**

(54) **KPCA-BASED NON-LINEAR CHILLER FAULT DETECTION METHOD**

(57)    The present invention relates to a nonlinear data-driven method for the detection of typical faults in refrigeration systems, like those occurring in water chiller systems. According to the present method, fault-free data of the refrigeration system are collected during normal operations (20) and a Gaussian Kernel Principal Component Analysis (KPCA) model is identified (21). The innovative part of the method lies in the development of a self-tuning procedure, which optimally tunes the Gaussian parameter, $\sigma$, and is able to understand non-linear relationship of the measured data. According to a preferred embodiment, the proposed algorithm exploits the monotonic relationship between $\sigma$ and the tightness of the boundaries of the trained fault-free model. The proposed algorithm employs of a self-tuning iterative bisection method to select the width of the Gaussian kernel parameter.

Based on the results of the KPCA fault detection model a feedback procedure is established wherein the thermal machine is able to autonomously change its behavior without the intervention of the operator. Said feedback procedure is established by defining performance requirements that the machine must be able to satisfy and implementing feedback algorithms to guarantee that said performance requirements are kept under control.

EP 4 148 518 A1

## Description

FIELD OF INVENTION

The present invention relates in general to a method for detecting faults in the refrigeration systems and re-establishing the normal operating conditions.

The aforementioned method for the fault detection in refrigeration system is based on Kernel Principal Component Analysis (KPCA) method, which is suitable for the treatment of non-linearities present in the operation of refrigeration systems, like chillers and heat pumps. In particular, said KPCA based fault detection method uses a self-tuning algorithm to optimize the fitting rate of the Kernel Gaussian parameter and based on the results of the fault analysis a feedback procedure is established by implementing several algorithms by which the machine is able to autonomously change its behavior without the intervention of the operator.

BACKGROUND

The statistical method of multivariate analysis defined by the Principal Component Analysis (PCA) is suitable to model the fault detection of refrigeration systems, like chillers and heat pumps, under the assumption of linearity between all the variables involved in the analysis.

For example, in the Italian patent application IT102016000053183 we have previously filed on May 24, 2016, a description of a method for detecting and diagnosing faults or anomalies in a liquid chiller device or in a heat pump has been provided. The method was based on a multivariate analysis of the PCA type (Principal Component Analysis). The PCA is a technique aimed at deriving, starting from a set of correlated numerical variables, a smaller set of "artificial" orthogonal variables. The reduced set of linear orthogonal projections (known as "principal components", "PC") is obtained by linearly combining the original variables in an appropriate manner. The method could also be applied in the case of particularly complex devices, presenting an essentially high number of variables, under the hypothesis of linear behavior of the variables.

However, this linearity is difficult to find in any operating mode and could be affected according to the particular operating conditions (change of set-point, modification of machine control settings, etc.), especially in particular complex device, as the refrigeration systems.

Facing with this limitation, and to give greater robustness to the fault-detection method, a new methodology has been introduced that best suits to the treatment of non-linearity present in the refrigeration systems operation.

The methodology, which goes by the name of Kernel Principal Component Analysis (KPCA), consists in projecting the collected and filtered data in a geometric space with high cardinality (greater than the space of the original variables). In this way the original data are transformed into a new dataset for which there is linearity in the links between the (new) variables. The latter are obtained through a procedure called "Kernel Trick". Once the transformation in the high cardinality geometric space has been carried out, it is possible to define statistical indices in a similar way to the PCA case, given the linearity guaranteed again in the new hyperspace.

In this way it is therefore possible to effectively treat non-linear behaviors found in the operation of refrigeration system, like liquid chillers or heat pumps, for the purpose of detecting and diagnosing faults or anomalies.

Many works have been published describing the use of KPCA method.

For example, Scholkpof, A.J. Smola, K.-R. Müller, "Nonlinear component analysis as a kernel eigenvalue problem", Neural Computation 10 (5) (July 1998) 1299-1319. [8], wherein the application of a kernel function has been proposed to compute the nonlinear principal components.

A further example is provided by the following publication, by Xiaogang Deng, Xuemin Tian, Sheng Chen, entitled "Modified kernel principal component analysis based on local structure analysis and its application to nonlinear process fault diagnosis", Chemometrics and Intelligent Laboratory Systems 127 (2013) 195-209, wherein a modified KPCA, referred to as the local KPCA (LKPCA), is proposed based on local structure analysis for nonlinear process fault diagnosis.

More recently, the kernel PCA (KPCA) method has gained considerable interests in various application fields.

For example, in the Chinese patent, CN 108,227,653 B (2017) a randomized kernel principle component analysis-based large-scale non-linear process monitoring method is described, belonging to the technical field of industrial process monitoring and diagnosis and mainly solving the rapid fault detection problem of the non-linear process under the industrial big data background.

More recently other methods have been disclosed which use KPCA only marginally and base fault detection on other techniques, like neural networks or particle swarm optimization algorithm.

Among them it is worth to mention the patent application CN 111,580,506 A (2020), wherein an industrial process fault diagnosis method based on information fusion is disclosed. The KPCA data processing method is used for dealing with the nonlinear problem of data.

Another method of this type is disclosed in the patent application CN 111,898,725 A, (2020), wherein an air conditioning system sensor fault detection method is presented, which uses a hybrid kernel function-based KPCA mathematical model for describing the operation state of the air conditioning system and sensor fault detection. According to the invention, a multi-target particle swarm optimization algorithm is introduced to solve the problem of fault detection optimization of the air conditioning system sensor.

By definition, in a one-class classification approaches, fault-free data of the chiller system are collected during normal operation condition and the fault detection model of KPCA is identified by using fault-free training samples. In this way only data labelled as normal are used for the training phase. This makes the proposed approach a one-class classifier, because data are classified as normal or faulty based on the normal condition training data set.

For example, the invention disclosed in the patent application CN 109,472,317 A (2018) solves the real-time problem of fault detection and isolation of multi-dimensional signals of gas sensors in equipment or instruments. A fault detection model of KPCA is constructed by using the approximate basis of training samples in normal state. When the fault is detected by the fault detection model of KPCA, the position of all the fault gas sensors is detected by the contribution method based on reconstruction.

Therefore, in one-class classification approaches using Gaussian kernel a fundamental task consists in finding an appropriate value of the width parameter $\sigma$: this parameter has a significant impact on accuracy and generalization performances of the trained model. The setting of parameter $\sigma$ has been topic of discussion in the literature in the context of one class Support Vector Methods (SVMs), as for example has been discussed in: S. Khazai, S. Homayouni, A. Safari, and B. Mojaradi, "Anomaly detection in hyperspectral images based on an adaptive support vector method," IEEE Geoscience and Remote Sensing Letters, vol. 8, no. 4, pp. 646-650, July 2011,

or in:

P. Evangelista, M. Embrechts, and B. Szymanski, "Some properties of the Gaussian kernel for one class learning", 09 2007, pp. 269-278.

However, to the best of authors knowledge, literature lacks a corresponding analysis in the field of KPCA approaches. In particular, among SVMs, the heuristic approach proposed by Wang et al. in:

H. Wang, L. Zhang, Y. Xiao, and W. Xu, "An approach to choosing Gaussian kernel parameter for one-class svms via tightness detecting", 2012 4th International Conference on Intelligent Human-Machine Systems and Cybernetics, vol. 2, Aug 2012, pp. 318-323,

is capable of accurately represents several non-linear data-structures without losing generalization properties.

Hereinafter, a KPCA-based non-linear fault detection method will be disclosed that solves the aforementioned problem by applying a modified version of the algorithm proposed by Wang et al., which was developed for One-Class SVMs, and adapting said algorithm for the KPCA methodology.

By means of the method described below it is therefore possible to effectively treat non-linear behaviors found in the operation of refrigeration machines, like liquid chillers or heat pumps, for the purpose of detecting and diagnosing faults or anomalies therein.

SUMMARY

A specific object of the present invention is that of providing a self-tuning KPCA-based approach for the detection of the faults that afflict refrigeration systems, which are also referred hereinafter as thermal machines.

In accordance with the present invention, a nonlinear data-driven method is employed in order to detect typical faults in refrigeration systems, like water chiller ones.

According to the present method, fault-free data of the refrigeration system are collected during normal operation conditions and a Gaussian Kernel Principal Component Analysis (KPCA) model is used to project the fault-free data original space into a high dimensional space and perform a principal component analysis (PCA) method therein. According to an embodiment, the disclosed method is developed in a semi-supervised manner, in which only data labelled as normal are used for the training phase. In this way the proposed approach is of one-class classifier type, by which it is possible to classify data as normal or faulty, with only the "knowledge" of normal functioning. This is fundamental for the applicability of the method in real systems, in which faulty data are rare or have not even seen in the past.

According to a primary aspect of the disclosed method, a self-tuning algorithm is designed, by means of which the optimal standard deviation of the Gaussian kernel ($\sigma$) is computed in order to optimize the KPCA fitting rate. This self-tuning procedure optimally tunes the Gaussian parameter and it is able to understand non-linear relationship of the measured data allowing to achieve a trade-off between representation and generalization of the trained fault-free model.

In accordance with an embodiment of the disclosed method, the proposed algorithm employs of a self-tuning iterative bisection method to select the width of the Gaussian kernel parameter.

According to a preferred embodiment, said KPCA-based non-linear thermal machine fault detection method comprises the following steps:

- extracting a set of training data in normal "fault-free" condition;
- applying a KPCA fault detection model with Gaussian parameters;
- applying a self-tuning algorithm including an iterative bisection method to select the width of the Gaussian parameter;
- based on the results of the KPCA fault detection model, establishing a feedback procedure wherein the thermal machine is able to autonomously change its behaviour without the intervention of the operator.

According to a preferred embodiment, said self-tuning algorithm comprises the following steps:

- defining an initial variance of the Gaussian parameter, comprising an upper and a lower bound identifying an under-fitted and an over-fitted KPCA model;
- averaging the Gaussian parameter and performing the KPCA model training based on sample data set extracted in normal operation conditions;
- estimating the tightness of the KPCA model, by establishing a condition of "loose" or "tight" KPCA model; for example, defining a threshold $T$ in order to decide if two samples are neighboring, a threshold S for the squared prediction error (SPE) to determine if a point is classified as normal or faulty and the value of parameter $\varepsilon$ to verify if the KPCA model is tight or loose.

When a new data sample is collected, based on the defined thresholds on which a fault matrix is established, the SPE is calculated and a fault is detected if its Squared Prediction Error (SPE) with respect to the KPCA matrix exceeds an opportune threshold S.

The advantage of using a self-tuning algorithm lies in the ability to minimize the probabilistic error in the classification of the data as faulty or normal.

Another aspect of the present invention is the implementation of a feedback procedure based on the results of the fault analysis, said feedback procedure allowing the thermal machine to autonomously change its behaviour without the intervention of the operator. According to a preferred embodiment said feedback procedure is implemented by defining different thermal machine "performance levels", which represents the performance requirements the machine must be able to satisfy. According to an embodiment, said thermal machine "performance levels" regards:

- the desired environmental thermo-hygrometric conditions (for example: the temperature);
- the level of the free surface of the liquid refrigerant used in the thermal machine equipped with flooded evaporators;
- the operating point of the compressors avoiding costly replacements or downtime of the thermal machine;
- the level sensor, which may affect the movement of the valve in the thermal machine equipped with flooded evaporators.

According to a preferred embodiment of the present method, specific feedback algorithms are implemented to ensure that said thermal machine performance levels are kept under control. For example, said feedback algorithms ensure that a correct environmental temperature of the final user is maintained, or the free surface level of the coolant inside the evaporator is controlled, or eventual mechanical and cooling problems of the internal parts of the compressor are monitored, or the valve excursion is maintained within a limited range in the event of incorrect sensor readings.

BRIEF DESCRIPTION OF THE DRAWINGS

For a better understanding of the present invention, preferred embodiments, which are intended purely by way of example and are not to be construed as limiting, will now be described with reference to the attached drawings, where:

- Figure 1 is a diagram representing the thermodynamic cycle of the industrial refrigeration systems, called chillers.
- Figure 2 is a flow chart diagram representing the entire method employing the self-tuning KPCA algorithm applied to real chiller data, in order to detect condenser fouling fault.
- Figure 3. a) Example of over-fitted KPCA model with $\sigma$ = 0.13; b) example of under-fitted KPCA model with $\sigma$ = 0.70.
- Figure 4 is a diagram representing the chiller system (400); Table 1 summarizes the variables used in KPCA matrix.
- Figure 5 is a graphical representation of a) refrigerant condenser pressure as function of external air temperature and evaporator load, b) ventilation level (FAN) as function of external air temperature and evaporator load. Data have been collected under normal operating conditions.
- Figure 6. Graphical representation of KPCA SPE box plot: normal vs faulty condition.
- Figure 7. a) Box plot representation. b) Percentage of compressor speed (*plr*) as function of the thermal load at the evaporator (gray data). Outlier data points represent some anomalies.
- Figure 8. Box-plot approach applied to the error of the regression model that uses the thermal load as input and *the plr* as output.

DETAILED DESCRIPTION

The following discussion is presented to enable a person skilled in the art to make and use the invention. Various modifications to the embodiments will be readily apparent to those skilled in the art, without departing from the scope of the present invention as claimed. Thus, the present invention is not intended to be limited to the embodiments described therein, but it has to be accorded the widest scope consistent with the principles and features disclosed herein and defined in the appended claims.

The theme of cooling is recurrent in the world around us. Air conditioning systems in residential environments are the most common examples of refrigeration systems. However, also in the treatment, storage, transport and distribution of food products, as well as in the health and tertiary sectors, refrigeration plays a central role.

Principal object of the present invention is to develop a method for the detection and diagnosis of faults in this type of refrigeration systems, called chillers.

Hereinafter, the refrigeration system is briefly analysed in its components, for which the operating principle and the significant variables for the fault detection task are derived.

After that, the analysis of a method based on the data for the detection of anomalies is described. The fault detection approach is based on the identification of a nonlinear data-driven model for the system. This model is then used in the monitoring stage.

Refrigeration system operation

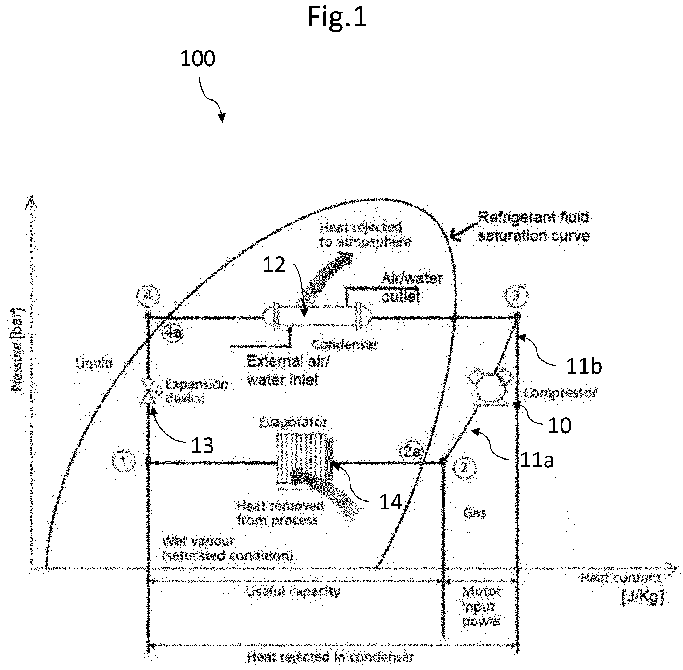

The industrial refrigeration systems, called chillers, realize the thermodynamic cycle (100) described according to Fig.1.

The cycle, in the case of air-condensed plant, performs as follow:

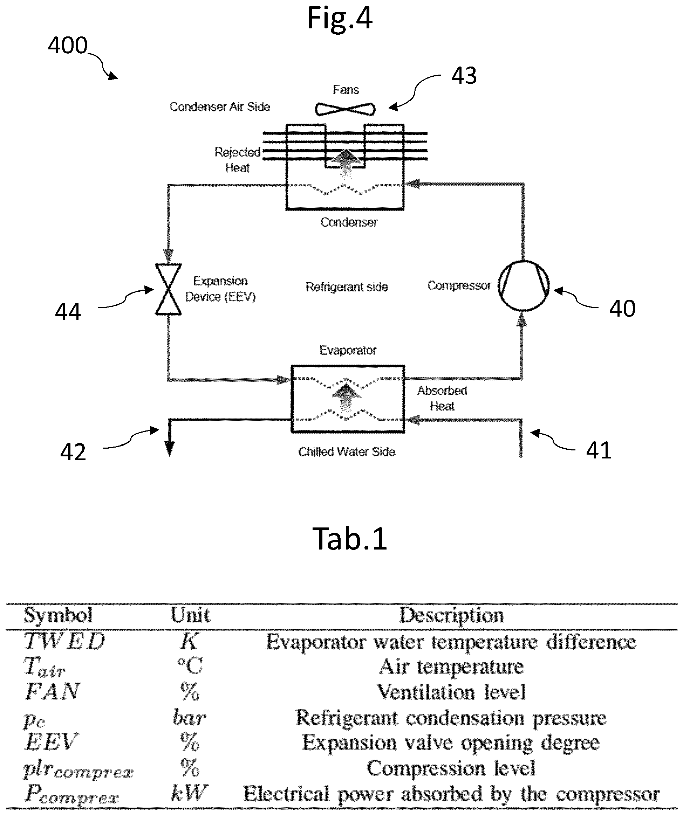

- in the tract (2) - (3) of the thermodynamic cycle a compressor (10) increases the pressure of the refrigerant fluid; the compressor (10) inlet section (11a) is called suction line, while the outlet (11b) is known as the discharge line.
- In the tract (3) - (4) of the cycle an heat exchanger (12), called condenser, removes the heat from the high pressure refrigerant fluid. At this stage, the heat flows from the refrigerant fluid to the external air thanks to the action of a fan system (see for example, fans (43) in Fig.4). In the sub-tract (3) - (4a) the refrigerant changes its state, from vapour to liquid. The last part of the condenser is used to further reduce the refrigerant temperature (4a) - (4), (subcooling process).
- In the tract (4) - (1) an expansion device (13) (valve or orifice) rapidly decreases the refrigerant pressure and temperature. Inside this component, also called throttling device, the molecules of the fluid at high pressure rapidly decrease their speed because of the collisions with the molecules at lower pressure. This causes a strong decrease in the fluid temperature (below the environment one) and produces the refrigeration effect.
- Finally, in the tract (1) - (2) the refrigerant at low temperature is used to cool a particular substance, typically water or brine. This substance is then circulated thanks to a hydraulic pump on the space of interest to produce the cooling effect in the air (residential applications, tertiary sector), or in other substances (food containers, chemical, and pharmaceutical products, and so on), depending on the application. At this stage, the heat is removed from the space of interest and it is absorbed by the refrigerant. This heat exchange takes place on a component called evaporator (14).

From the evaporator (14), the refrigerant is drawn by the compressor (10) and the cycle is repeated. Generally, in the evaporator (14) the refrigerant is also heated: in this way it enters in the compressor (10) in vapour form, preventing the presence of liquid in the compression stage (superheating process, tract (2a) - (2) of the diagram).

The refrigerator systems, like chillers, are equipped with electronics, comprising Programmable Logic Controllers, input/output modules and others, that have to guarantee safety operations, especially for the compressor. For example, the on-board electronics stop a compressor when the temperature in its electric coils becomes larger or if the discharge pressure exceeds a pre-set threshold. Moreover, the electronics implement the three more relevant chiller controllers: the leaving water temperature, the superheat (or the refrigerant level) and the condensation regulation.

The first control acts on the compressor (10) speed and regulates the amount of refrigerant that flows inside the pipes. The goal of this controller is to maintain the output water/brine temperature at the desired value. For this reason, it is called the master temperature controller of the chiller. When there is an increase in the water temperature at the evaporator (14) outlet, the compressor (10) is piloted to elaborate a greater amount of fluid in order to provide the valve (13) with the missing refrigerant to establish the desired cooling. Conversely, when the leaving water temperature goes down with respect to the set value, the compressor (10) has to decrease the refrigerant pumping rate towards the expansion device (13). At this stage, the electronics act on the motor speed connected to the mechanical components which perform the compression.

The second controller (i.e. the superheat regulation) acts on the expansion valve (13) opening degree in order to guarantee the correct refrigerant superheat at the compressor (10) inlet. In fact, it is required to increase the temperature of the refrigerant at the evaporator (14) outlet to avoid liquid refrigerant particles to enter in the compressor (10) and damage it.

The third controller is placed at the condenser (12) side and has to guarantee the heat exchange for the condensation process. In air-condensed chillers the fans speed is piloted: clearly, to optimize the heat exchange the simplest solution is to keep the fans always at the maximum speed. However, this solution may be expensive in terms of noise pollution and electrical power consumption. Moreover, fans speed should be decreased when the external air temperature is low to avoid too low condensation temperature, which may damage the compressor (10). Therefore, in some cases, a condensation pressure (or temperature) is preliminary set for the refrigerant fluid and fans are controlled to guarantee this value. In this way the fans speed takes account of the external air temperature behaviour.

Data driven fault detection

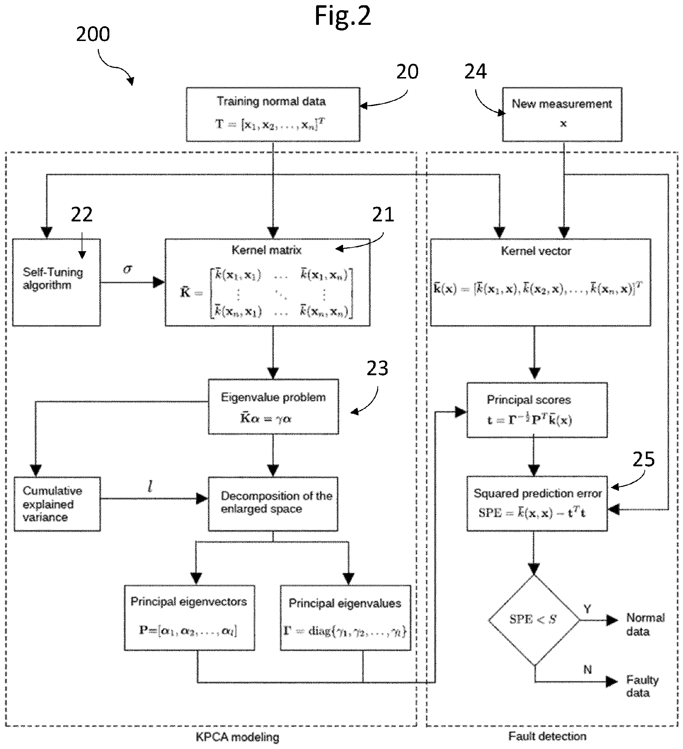

According to an aspect of the present invention, a nonlinear data-driven approach is employed in order to detect typical faults in refrigeration systems, like water chiller systems. Fault-free data of the refrigeration system are collected during normal operation conditions. A flow chart representing the entire fault detection procedure is depicted in Fig.2. According to it, a series of training normal data (20) are collected in real time and in normal operation conditions by the chiller controllers, said data comprising, for example, air temperature, electrical power absorption, compression level, ventilation level, refrigerant condensation pressure, expansion valve opening degree and many others. For example, we may consider the training data set:

$$[x_1, x_2, \ldots , x_n]^T$$

and a Gaussian Kernel Principal Component Analysis (KPCA) model is identified. For example, a Kernel matrix (21) is built to train the system in a way to account for the non-linearities affecting the system. The matter is discussed in detail in the Appendix A.

At the beginning of the process the width parameter $\sigma$ is fixed to an initial arbitrary value. Then it is iteratively updated based on the performance of the Kernel matrix (21), making sure that the data are not too tight or too loose. The setting of the Gaussian parameter $\sigma$ is accurately performed through a self-tuning algorithm (22), said algorithm employing a self-tuning iterative bisection method to select the width of the Gaussian kernel parameter that optimize the KPCA fitting rate.

Once KPCA data matrix has been built, the eigenvalues-eigenvectors problem (23) is solved in a similar way as is solved in the standard Principal Component Analysis (PCA) in order to define the Square Predicted Error (SPE) index (see Appendix A for the mathematical details).

When a new data sample, x, (24) is collected, a fault is detected if the calculated Squared Prediction Error, SPE (25), with respect to the KPCA matrix exceeds an opportune threshold S

*SPE > S*

In this case the new measurement data (24) is categorized as fault. Vice versa if the Squared Prediction Error, SPE (24), with respect to the KPCA matrix is below an opportune threshold S,

*SPE < S.*

the new measurement data is categorized as normal.

According to the one-class classification approaches using Gaussian kernel a fundamental task consists in finding an appropriate value of the width parameter $\sigma$: this parameter has a significant impact on accuracy and generalization performances of the trained model.

According to the proposed method, by using said self-tuning algorithm, an optimum value for the standard deviation of the Gaussian kernel ($\sigma$) is obtainable. The algorithm exploits the monotonic relationship between $\sigma$ and the tightness of the boundaries of the trained fault-free model: as $\sigma$ rises, the fault-free zones become looser increasing the generalization performances of the KPCA model while as $\sigma$ lowers, the fault-free zones become tighter highlighting the representation features.

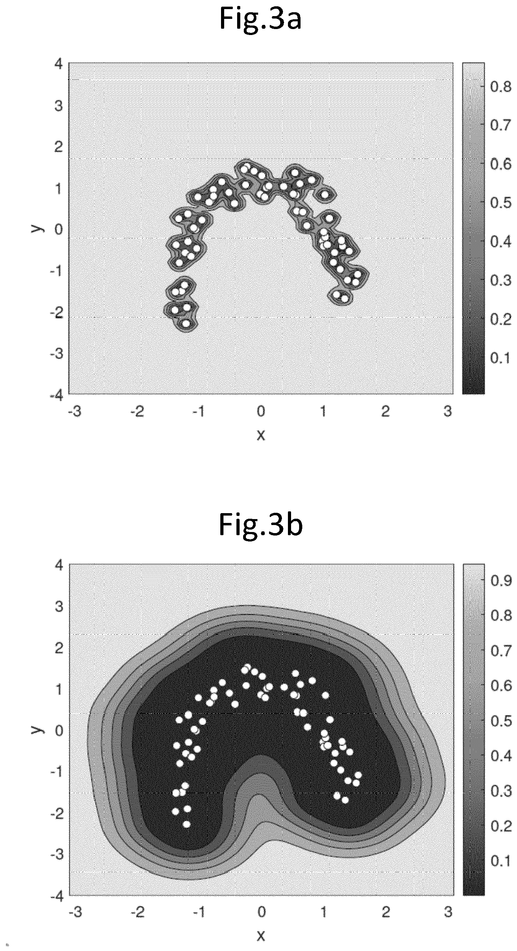

For the sake of clarity, the following examples is proposed. Consider sixty fault-free data belonging to a semicircle distribution in a 2D plane, as shown in Fig.3a or 3b. According to the following example, the dimension of the residual space containing the last principal components is set in such a way as it explains a low cumulative variance (lower than 6%). Figs. 3a and 3b depict the considered training data and the SPE values is represented in a 2D samples plane after performing the KPCA training with different values of $\sigma$; the shade of grey is associated to the SPE values: from dark (low SPE) to bright (high SPE). Fig.3a clearly over-fits the training data set since the KPCA model results too tight while generalization properties are enhanced in Fig.3b obtaining a loose KPCA model. The proposed approach results capable of obtaining a good trade-off between representation and generalization.

Self-Tuning Algorithm

In detail, the developed algorithm consists of a self-tuning iterative bisection method to select the width of the Gaussian parameter. Hereinafter, the proposed heuristic self-tuning procedure according to the present invention is described.

The self-tuning algorithm is implemented in different steps:

    1. Defining the initial upper ($\sigma_u$) and lower ($\sigma_l$) bound values for the Gaussian parameter. The initial upper bound determines an under-fitted KPCA model while the initial lower bound ensures an over-fitted model.
    2. Taking the average $\sigma$ value

$$\sigma = (\sigma_\mathrm{u} + \sigma_\mathrm{l})/2$$

and performing the KPCA training.
    3. Estimating the tightness of the KPCA model.

        a. If the KPCA model results to be loose, the following condition is set: $\sigma_u = \sigma$.
        b. If the KPCA model results to be tight, the following condition is set $\sigma_l = \sigma$.
        c. In case the tightness of the KPCA model doesn't result to be loose or tight, the iteration is stopped.

    4. If the difference $\sigma_u - \sigma_l$ results to be less than a

chosen threshold $\varepsilon$, the iteration is stopped. Otherwise, it returns to step 2.

To decide if a KPCA model is loose or tight (step 3 of the algorithm), according to an embodiment of the present method, the following heuristic procedure is proposed:

- if there exist a large hole (for example, an area without samples) inside the fault-free area, the KPCA model will be considered loose; for example, the KPCA model in Fig. 3b can be considered loose since there is a large dark (with low SPE) hole without samples inside the semicircle data distribution. The condition of loose KPCA model can be intuitively verified by checking if there exist a midpoint of training data belonging to the KPCA model with an enough large neighbourhood without samples;
- if there exist a zone between two neighbouring samples that is outside the fault-free area, the KPCA model will be considered tight. For example, the KPCA model in Fig. 3a can be considered tight because we can see that there are bright (i.e. with high SPE) zones between neighbouring data. The condition of tight KPCA model can be intuitively verified by checking if there exist a midpoint of neighbouring samples that is outside the KPCA model.

According to an embodiment a threshold $T$ is defined to decide if two samples are neighbouring, a threshold S for the squared prediction error (SPE) is defined to determine if a point is classified as normal or faulty and the value of parameter $\varepsilon$ is defined to verify if the KPCA model is loose.

According to a preferred embodiment, the procedure for the evaluation of the tightness of the KPCA model includes the following steps:

1) Evaluating if the fault-free zone is loose. For all pairs $(x_i, x_j)$ such that $\|x_i - x_j\| > T$, if there exists at least one pair whose midpoint $\bar{x}$ satisfies the following inequality

$$SPE\,(\bar{x}) < S$$

the region is considered loose and the algorithm proceeds to step 2. In case no decision is taken after all above conditioned pairs have been tested, the KPCA model is judged not being loose and the algorithm proceeds to step 2.

2) Evaluating if the fault-free zone is tight. For all pairs $(x_i, x_j)$ such that $\|x_i - x_j\| \leq T$, if there exists at least one pair whose midpoint $\bar{x}$ satisfies the following inequality

$$SPE\,(\bar{x}) \geq S$$

the region is considered tight and the algorithm proceeds to step 3. In case no decision is taken after all above conditioned pairs have been tested, the KPCA model is judged as not tight and the algorithm proceeds to step 3.

3) Taking a decision for tightness of the KPCA model. Considering the judgment provided in steps 1) and 2), labelling the KPCA model as loose or tight.

Two special cases may arise:

- if the distribution of the training samples is non-uniform, the KPCA model may be judged both loose and tight; in this case the KPCA model is preferred to be considered tight;
- if any decision is taken about the tightness of the KPCA model, and it is judged neither loose nor tight, the provided $\sigma$ is considered optimal.

Chiller fault detection via KPCA algorithm

KPCA algorithm described in previous section has been applied to real chiller data, in order to detect condenser fouling fault. The chiller system (400) is depicted in Fig.4 and the variables used in KPCA matrix, which are summarized in Table 1, are defined as follows:

- *TWED* [°K]: temperature difference RWT-LWT, where RWT is the returning (from the plant) water (41) temperature and LWT is the leaving water (42) temperature, that is the temperature of the water that leaves the evaporator after the cooling process.
- *Tair* [°C]: temperature of the external air. This signal plays a crucial role in condensation process.
- *FAN* (%): ventilator speed. FAN = 0% means that ventilation system (43) is off while FAN=100% means that ventilator (43) is at the maximum speed. The speed is regulated via a feedback controller.
- *EEV* (%): opening degree of the electronic expansion valve (44); 0% means that the valve (44) is closed, while 100% means that the valve (44) is completely open. The valve (44) opening is regulated via a feedback-loop controller in order to keep a constant superheat value (direct-expansion chillers) or a constant liquid level in flooded evaporators.
- *plrcomprex* (%): compressor speed. 0% means that compressor (40) is forced off. Compressor speed is established via feedback-loop control.
- *Pcomprex* (kW): compressor (40) electrical power consumption.

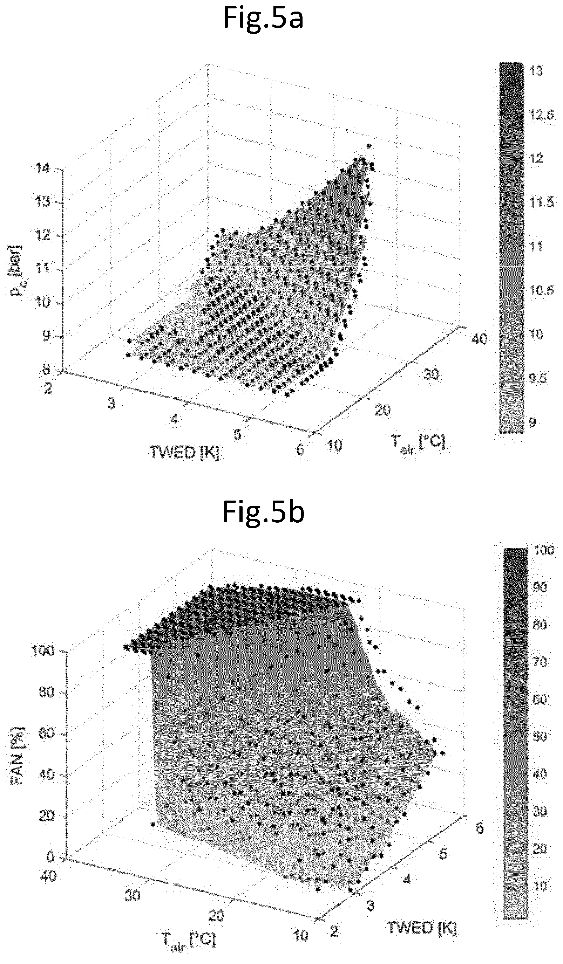

Physical behaviour of the ventilation level and refrigerant condenser pressure are two examples of non-linearity in chiller system, as shown in Figure 5a and 5b.

Figure 5b shows along z-axis the values of the ventilation level (FAN) for different values of external air temperature ($T_{air}$, x-axis) and evaporator cooling load (*TWED*, y-axis: *TWED* is proportional to the cooling load).

FAN=0% means that ventilation system is off, while FAN=100% means that ventilators work at maximum speed). As we can see from the 3D graph, the FAN is not a linear function of the external air temperature and cooling load: this means that for some sub-region of the x-y plane FAN values are characterized from a particular slope, but the slope change in other sub-regions of the x-y plane. Moreover, we observe that the slope is zero for high values of the external air temperature, when the ventilation is fixed to 100%.

A similar behaviour characterized the condenser pressure (figure 5a): when the external air temperature ($T_{air}$, y-axis) is lower than 25°C, the condenser pressure ($p_c$, along z-axis) is constant (8 bar). When the air temperature grows up from 25°C, the condenser pressure increases with the external air temperature itself; the slope of the graph is also related to the cooling load. In both cases, the physical variable along z-axis is a non-linear function of the two variables located on the x and y-axes. An accurate modelling of these non-linear problems requires some non-linear mathematical techniques.

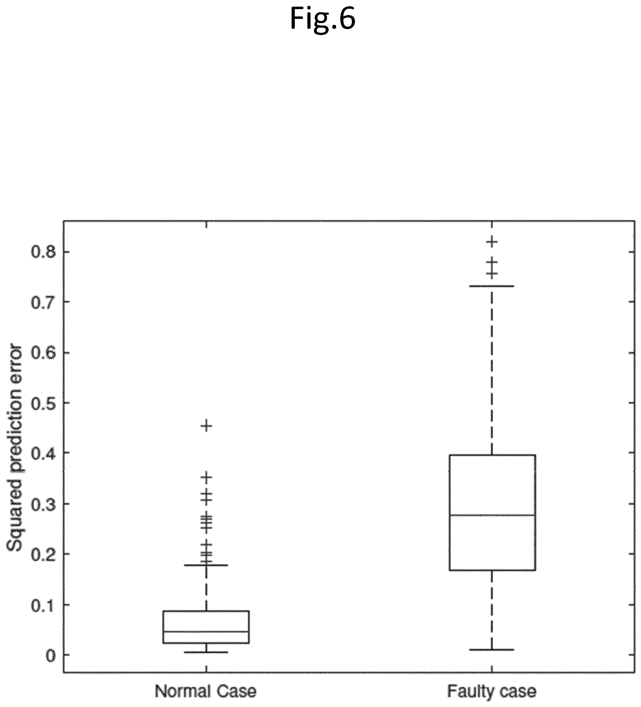

Finally, in Figure 6 the KPCA Squared Prediction Error (SPE) under normal and condenser fouling fault condition is represented. See Appendix B for a deeper introduction to the statistical concept of box-plot.

Feedback procedure

Through the implementation of a "feedback" procedure, the thermal machine is able to autonomously change its behaviour without the intervention of the operator with the aim of maintaining an appropriate level of performance in all working conditions. The feedback considered therein is a product of diagnostics: based on the results produced by the fault analysis, the activation or not of the feedback procedure is decided.

In particular, various "performance levels", as performance benchmarks that the machine must be able to satisfy, have been defined. Said performance level comprising:

- the accurate regulation of the temperature in the environment of the final user and, more generally, of the thermo-hygrometric conditions desired by the user;
- the maintenance of the correct level of free surface of the liquid refrigerant inside the evaporator (this refers to chillers equipped with flooded evaporators);
- the automatic modification of the operating point of the compressors in the event of problems detected by the fault analysis on the mechanical state of the shaft or on the cooling circuit inside the compressor;
- the management of any anomalies in the level sensor in the evaporator so that they do not have repercussions on the expansion valve and on the refrigerant circuit.

To keep each of said "performance levels" under control, specific feedback algorithms have been implemented.

As an example, the structure and function of the principal feedback algorithms are illustrated hereinafter.

Algorithm 1 (Temperature Regulation of the environment)

Once the user has set the desired environmental thermo-hygrometric conditions, they must be met with the greatest possible accuracy, regardless of external perturbations. This means that the calibration of the parameters of the software controller on the machine must be able to update itself, without any intervention by an external operator, when a deterioration in the satisfaction of the set conditions is recorded. The following flow-chart implements an adaptive control which, in the presence of a failure to satisfy user requests (for example, due to perturbations or particular thermodynamic operating conditions), automatically modifies some parameters to ensure a return to normality.

The relevant part of the flow-chart is the test of the control parameter or "chiller range". It is a kind of hysteresis amplitude with which the user temperature is controlled. Based on this control parameter, the number of compressors to be activated is decided. An adaptive control of control parameter allows the start of the correct number of compressors in any operating condition.

Algorithm 2 (Maintenance of the correct level of free surface of the liquid refrigerant inside the evaporator)

In the thermal machines equipped with flooded evaporators it is essential to monitor and adapt the control of the free surface level of the coolant inside the evaporator. There are two main reasons for this regulation. The first concerns energy efficiency: levels that are too low lead to a reduced heat exchange with the water sent to the user (which flows in pipes embedded in the evaporator) which could exit at a higher average temperature or force the compressors to a additional electrical power consumption. Furthermore, in the event of a low level, the suction pressure is reduced resulting in a malfunction of the compressors located downstream of the evaporator. The second reason is instead linked to the risk that a few drops of liquid may reach the compressor causing it to malfunction and this occurs in the presence of excessively high levels. Hence the importance of precisely adjusting the level, adapting the saturations set for the electronic expansion valve (EEV- electronic expansion valve) in the event of malfunctions.

The anomaly is eliminated with an automatic approach that provides for the gradual correction of the minimum and maximum saturations of the electronic expansion valve up to limit values. In order to avoid that the corrections lead to malfunctions in other parts of the machine, a continuous check of the pressure values at the suction and discharge of the compressors is carried out.

Algorithm 3 (Automatic modification of the operating point of the compressors)

Compressors are among the most expensive components within thermal machines. Monitoring the health of each compressor is essential to prevent costly replacements or downtime. In case the diagnostic algorithm detects mechanical and cooling problems of the internal parts of the compressor, it is possible to gradually limit the power supplied by the compressor avoiding the operation in critical conditions or proceed with a momentary disqualification from the operation of the problematic compressor (keeping the remaining ones running to at least partially satisfy the system requirements).

Algorithm 4 (Management of the anomalies in the level sensor in the evaporator)

Another source of problems for thermal machines with flooded evaporator is the possible malfunction of the level sensor, which could, in the event of incorrect measurements, force the electronic valve to move abruptly and do not correspond to the actual liquid level. Therefore, a feedback algorithm is useful that avoids sudden movements of the valve, a source of faults also for the compressors. This is achieved by limiting the valve excursion within a limited range in the event of incorrect sensor readings.

Finally, it is clear that numerous modifications and variants can be made to the present invention, all falling within the scope of the invention, as defined in the appended claims.

APPENDIX A

**Introduction to KPCA**

In order to identify the kernel PCA model of process data with $m$ different signals, $n$ measurements, taken under normal operating conditions, we consider the training set

$$[x_1, x_2, \ldots, x_n]^T$$

Each of the measurement is a $m$-dimensional vector and can be mapped into a $h$-dimensional space called enlarged space via a mapping function $\emptyset_i = \emptyset(x_i)$ such that the dot product of the two vectors $\emptyset_i$, $\emptyset_j$ can be computed via an opportune kernel function $k$ that we assume in Gaussian form:

$$k(x_i, x_j) = e^{-\frac{(x_i - x_j)^T (x_i - x_j)}{2\sigma^2}}$$

As before said, the dot product of the mapping function can be computed as

$$\emptyset_i^T \emptyset_j = k(x_i, x_j)$$

KPCA steps

• Build the kernel matrix

$$K = \begin{bmatrix} k(x_1, x_1) & \cdots & k(x_1, x_n) \\ \vdots & \ddots & \vdots \\ k(x_n, x_1) & \cdots & k(x_n, x_n) \end{bmatrix}$$

Find the mapping function vector

$$\emptyset = [\emptyset_1, \ldots, \emptyset_n]^T$$

such that

$$K = \emptyset \emptyset^T$$

Center data in the enlarged space by defining

$$\overline{\emptyset} = [\overline{\emptyset_1}, \ldots, \overline{\emptyset_n}]^T$$

where

$$\overline{\emptyset}_i = \emptyset_i - \frac{\sum_{k=1}^{n} \emptyset_k}{n}$$

Defining the new kernel matrix

$$\overline{K} = \begin{bmatrix} \overline{k}(x_1, x_1) & \cdots & \overline{k}(x_1, x_n) \\ \vdots & \ddots & \vdots \\ \overline{k}(x_n, x_1) & \cdots & \overline{k}(x_n, x_n) \end{bmatrix}$$

where

$$\overline{k}(x_i, x_j) = \overline{\emptyset}_i^T \overline{\emptyset}_j$$

Solve the eigenvalue problem

$$\overline{K} \alpha_j = \gamma_j \alpha_j$$

and define the principal eigenvectors of the enlarged space by choosing the l principal eigenvectors associated to the l principal eigenvalues.

$$P_e = \left[\frac{1}{\sqrt{\gamma_1}}\emptyset^T\alpha_1, \ldots, \frac{1}{\sqrt{\gamma_l}}\emptyset^T\alpha_l\right] = \emptyset^T P\Gamma^{-\frac{1}{2}}$$

where

$$P = [\boldsymbol{\alpha_1}, \ldots, \boldsymbol{\alpha_l}]$$

$$\Gamma = diag(\gamma_1, \ldots, \gamma_l)$$

In the matrix, the eigenvalues have to be placed in descending order. Similarly for the eigenvectors.

Define the fault index SPE (Squared Prediction Error) as

$$SPE = \bar{\phi}^T\left(\boldsymbol{I} - \boldsymbol{P_e}\boldsymbol{P_e}^T\right)\bar{\phi}$$

APPENDIX B

**Introduction to Box-plot**

Box-plot is a visual instrument which allow to represent and classify some data with respect to previous observations.

In statistics, an abnormal observation is also called *outlier* or *fault* and is defined as a point that is far from other observations or, in general, a point that is far from the elaborated model of the application. An outlier may be due to the variability in the measurement, to faults that affect the system or it may indicate experimental error. In the case of one-dimensional data or single time series, the visual inspection of the data is often sufficient to detect the outliers. In presence of multidimensional data, the problem is more complex: the visual analysis may be an insufficient or a non-trivial task.

Moreover, the visualization of data with more than three variables is not possible. In these multidimensional cases, the correlations among variables have to be considered to detect abnormal combinations. Since the monitoring of the refrigeration system involves several signals, some of which are correlated, in this patent we are in a multidimensional situation.

The boxplots are based on the concept of *median.* Numerical data samples are stored in an array and ordered from the smallest to the largest sample. The median is the value in the central position of the *ordered* array. In particular, if the array size is denoted with $n$ (that is $n$ is the number of the observed values), two cases need to be distinguished:

- n is odd: the median is the value in the position $(n+1)/2$ in the ordered array;
- n is even: the median is the average between the values in the positions $\lfloor(n+1)/2\rfloor$ and $\lceil(n+1)/2\rceil$ of the ordered array, where the symbols $\lfloor$ and $\rceil$ denote the two nearest integers between which the rational number $(n+1)/2$ is comprised (lower and upper integer respectively).

It is clear from the definition of the median that 50% of the data samples are lower than the median value and 50% are higher. The median is a robust description for the average behaviour of the data because its value is not affected by possible outliers. Conversely, the statistical mean is not robust to extreme samples.

The median represents the second *quartile* of the dataset. In general, a quartile differentiates the 25% of the samples in an array. In the case of an ordered array, the first quartile (Qi) is the value of the sample in the dataset for which 25% of the observations are smaller and 75% are larger than $Q_1$: for this reason, $Q_1$ is called the lower quartile. The third quartile, denoted via $Q_3$, is the sample value for which only 25% of the observations are greater than $Q_3$, which represents the upper quartile.

The following rules hold for the first and third quartiles in the *ordered array:*

- Q1 is the value in the position $(n+1)/4$;
- Q3 is the value in the position $3(n+1)/4$.

If $(n+1)/4$ or $3(n+1)/4$ are fractional half (for example 2.5, 7.5, 8.5, etc.) then the correspondent quartile is the average of the two data values in the nearest lower and higher integer positions (for example 2 and 3, 7 and 8, 8 and 9, etc.). If the result is not a whole number or a fractional half, the position is the nearest integer (for example 4.7 → 5).

The middle 50% samples of the dataset lie between the quartiles $Q_1$ and $Q_3$. Therefore, the difference

$$IQR = Q_3 - Q_1$$

measures the spread in the middle 50% of the data and it is called the Inter Quartile Range (IQR). The IQR is also called the *midspread* because it covers the middle 50%. Outliers or extreme values do not influence the IQR. Like the median, which generalizes the concept of average value, the IQR represent the robust generalization of the concept of standard deviation for the dataset.

The IQR represents a measure of the "normal" variability of the samples in the dataset and it can be used to detect outliers. In particular, an observation in the database is considered an outlier if it is more than 1.5 times the interquartile range below the first quartile or above the third quartile.

In details, let x denote an observation of the considered variable or time series.

Mathematically, x is an outlier if

$$x > Q_3 + 1.5 \cdot IQR \quad or \quad x < Q_1 - 1.5 \cdot IQR$$

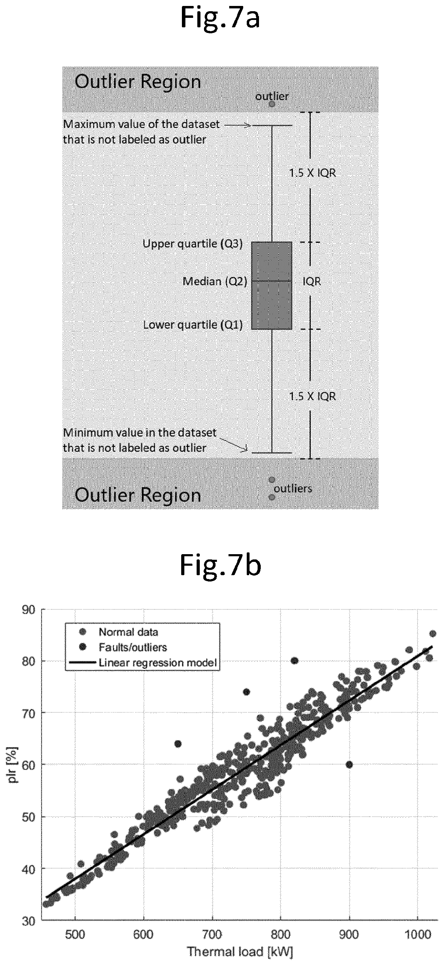

In the boxplot the robust measures introduced in this section are plotted in the way indicated in Fig.7a.

**Boxplot representation**

The IQR approach is simple but effective for the "outliers" detection task. Its main drawback is represented by the fact that it can be used only for univariate data. When in a system there are more than one signal involved, one might be tempted to apply the IQR method for each variable separately. Performances in this case may be really bad also in linear conditions and some of the outliers or faults might not be detected. In particular, the situation is critical when the variables are mutually dependent. As an example, consider Fig.7b where a two-dimensional dataset referred to a real refrigeration system is represented. It is clear the relationship between the two variables, the thermal load at the evaporator and the motor speed of the compressor, denoted by the term *partial load ratio* (*plr*) and expressed in percentage. When there is a change in the thermal load, also the compressor speed changes and this influence can be modelled by a regression. The points lying outside the distribution are an exception to this model: external influences, measurement errors or faults in the system have led to collect also these "outliers".

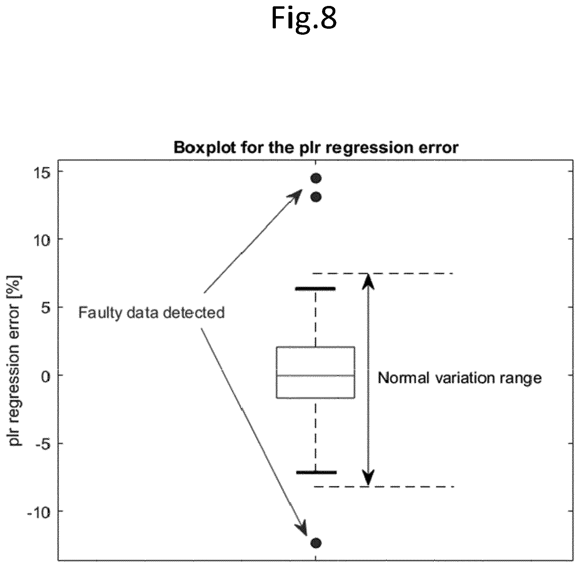

If one tries to compute the IQR for the one-dimensional *plr* variable, no outliers will be detected. In fact the ordinate values of these outlier points in the graph lie inside the normal range of *the plr* values (similarly, the abscissa values of the outlier points lie inside the thermal load usual variability): it is the *combination* of the two coordinates, that is their *correlation,* that is anomalous in the outlier points. Therefore, the problem of fault detection in a multivariate dataset needs to introduce some correlation-based approaches. The way introduced in this patent is to use the data stored in the database to build a KPCA model. When the KPCA model is identified, the differences between the predicted and measured output in the identification dataset, called *squared prediction errors,* are stored in an array and used to define the interquartile range for the model error signal and to build the boxplots. In this way we have reduced a multidimensional dataset to a single variable: the model error. The model is then used to compute the squared prediction error value for each new data sample collected on the plant. Eventual future faulty data (for which the model error is bigger in absolute value) are labelled as outliers or faults. In Fig.8 the boxplot resulting from the application of the method to the squared prediction error for the case *thermal load - plr* is showed.

**Claims**

1. KPCA-based non-linear data-driven method for detecting faults in thermal machines and re-establishing the normal operating conditions comprising

- extracting a set of training data samples in normal "fault-free" condition;

    - identifying a Gaussian Kernel Principal Component Analysis (KPCA) model with Gaussian parameter;

- applying a self-tuning algorithm to select the width of the Gaussian parameter;
- based on the results of the KPCA fault analysis, establishing a feedback procedure wherein a thermal machine is able to autonomously change its behaviour without the intervention of the operator.

2. The method according to claim 1 wherein said self-tuning algorithm applies an iterative bisection method to select the width of said Gaussian parameter.

3. The method according to claim 2, comprising:

    a. defining an under-fitted and an over-fitted KPCA model by defining an initial upper bound $\sigma_u$ and an initial lower bound $\sigma_l$ of said Gaussian parameter of said KPCA model;
    b. performing the KPCA training on the $$\sigma = \frac{\sigma_u + \sigma_l}{2}$$ value;
    c. estimating the tightness of the KPCA model letting

        • ($\sigma_u = \sigma$ in case said KPCA model results to be loose, or
        • $\sigma_l = \sigma$ in case said KPCA model results to be tight, or
        • stop the iteration in case the difference ($\sigma_u — \sigma_l$ is less than a chosen threshold $\varepsilon$. Otherwise return to step b.

4. The method according to claim 3 wherein the step of estimating the tightness of KPCA model comprises a heuristic method to estimate said tightness conditions, including the following steps:

    i. verifying the existence of a large hole without samples inside the fault-free area of the distribution;
    ii. establishing a condition of "loose" KPCA model if the condition i. is verified;
    iii. verifying the existence of a zone between two neighbouring samples that is outside the fault-free data distribution;
    iv. establishing a condition of "tight" KPCA model if the condition iii. is verified.

5. The method according to claim 4 wherein the condition of existence of a large hole without samples inside the fault-free data distribution is verified by checking the existence of a midpoint among said training data belonging to the KPCA model with an enough large neighbourhood without samples.

6. The method according to claim 4 wherein the condition of existence of a zone between two neighbouring samples that is outside the fault-free data distribution is verified by checking the existence of a midpoint between neighbouring samples that is outside the KPCA model.

7. The method according to claim 5 comprising

    a. defining a threshold T in order to decide whether or not two samples are neighbouring;
    b. defining a threshold S for the Squared Prediction Error (SPE) to determine whether a point is classified as normal or faulty;
    c. for all pairs $(x_i, x_j)$ such that $\|x_i - x_j\| > T$ verifying the existence of at least one pair whose midpoint $\bar{x}$ satisfies the following inequality

$$SPE(\bar{x}) < S$$

8. The method according to claim 6 comprising

    a. defining a threshold $T$ in order to decide whether or not two samples are neighbouring;
    b. defining a threshold $S$ for the squared prediction error to determine whether a point is classified as normal or faulty;
    c. for all pairs $(x_i; x_j)$ such that $\|x_i - x_j\| \leq T$ verifying the existence of at least one pair whose midpoint $\bar{x}$ satisfies the following inequality

$$SPE(\bar{x}) \geq S$$

9. The method according to claim 4 wherein

    a. if a condition of loose KPCA model is verified, the KPCA model is labelled as "loose";
    b. if a condition of tight KPCA model is verified, the KPCA model is labelled as "tight";
    c. if both a loose and a tight KPCA conditions are verified due to the nonuniformity of the distribution of the training samples, the KPCA model is labelled as "tight";
    d. if neither a loose or a tight KPCA condition is verified, the provided value of the width parameter $\sigma$ is considered to be optimal.

10. The method according to claim 1 wherein establishing a feedback procedure comprises

    a) defining thermal machine performance levels by defining various performance requirements that must be satisfied by the machine, said performance requirements comprising:

        i. the regulation of the temperature in the environment of the final user and, more generally, of the thermo-hygrometric conditions desired by the user;
        ii. maintenance the correct level of free surface of the liquid refrigerant inside the evaporator;
        iii. automatic modification of the operating point of the compressors, in case problems on the mechanical state of the shaft or on the cooling circuit inside the compressor are detected by said fault analysis;
        iv. the management of any anomalies in the level sensor in the evaporator so that they do not have repercussions on the expansion valve and on the refrigerant circuit;

    b) for each of the points i-iv described in the preceding step, implementing an algorithm executing the operations required to keep each one of said thermal machine performance levels under control.

11. The method according to claim 10 wherein the thermal machine components that are subject to said feedback procedure comprise electronic expansion valve, software parameterization of the compressors, compressor outlet / inlet pressure ratio, cavity temperature of the compressors, level sensor in case of flooded evaporators.

# Fig.1

100

# Fig.2

# Fig.3a

# Fig.3b

## Fig.4

## Tab.1

| Symbol | Unit | Description |
|---|---|---|
| $TWED$ | $K$ | Evaporator water temperature difference |
| $T_{air}$ | $°C$ | Air temperature |
| $FAN$ | $\%$ | Ventilation level |
| $p_c$ | $bar$ | Refrigerant condensation pressure |
| $EEV$ | $\%$ | Expansion valve opening degree |
| $plr_{comprex}$ | $\%$ | Compression level |
| $P_{comprex}$ | $kW$ | Electrical power absorbed by the compressor |

## Fig.5a

## Fig.5b

# Fig.6

# Fig.7a

# Fig.7b

# Fig.8

**Boxplot for the plr regression error**

Europäisches
Patentamt

European
Patent Office

Office européen
des brevets

# EUROPEAN SEARCH REPORT

Application Number

EP 21 19 6231

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI XUEMEI ET AL: "Combining KPCA and LSSVM for HVAC fan machinery fault recognition", ROBOTICS AND BIOMIMETICS (ROBIO), 2009 IEEE INTERNATIONAL CONFERENCE ON, IEEE, PISCATAWAY, NJ, USA, 19 December 2009 (2009-12-19), pages 1241-1246, XP031642119, ISBN: 978-1-4244-4774-9 * page 1241 – page 1245; figure 2 * | 1-11 | INV. G05B23/02 |
| X | ZHANG NANHUA ET AL: "Fault detection of chiller based on improved KPCA", 2016 CHINESE CONTROL AND DECISION CONFERENCE (CCDC), IEEE, 28 May 2016 (2016-05-28), pages 2951-2955, XP032936949, DOI: 10.1109/CCDC.2016.7531487 [retrieved on 2016-08-03] * page 2951 – page 2954 * | 1-11 | |

TECHNICAL FIELDS
SEARCHED     (IPC)

G05B

The present search report has been drawn up for all claims

| Place of search | Date of completion of the search | Examiner |
|---|---|---|
| Munich | 3 February 2022 | Rakoczy, Tobias |

EPO FORM 1503 03.82 (P04C01)

## REFERENCES CITED IN THE DESCRIPTION

### Patent documents cited in the description

- IT 102016000053183
- CN 108227653 B
- CN 111580506 A
- CN 111898725 A
- CN 109472317 A

### Non-patent literature cited in the description

- **SCHOLKPOF ; A.J. SMOLA ; K.-R. MÜLLER.** Nonlinear component analysis as a kernel eigenvalue problem. *Neural Computation,* July 1998, vol. 10 (5), 1299-1319
- **XIAOGANG DENG ; XUEMIN TIAN ; SHENG CHEN.** Modified kernel principal component analysis based on local structure analysis and its application to nonlinear process fault diagnosis. *Chemometrics and Intelligent Laboratory Systems,* 2013, vol. 127, 195-209
- **S. KHAZAI ; S. HOMAYOUNI ; A. SAFARI ; B. MOJARADI.** Anomaly detection in hyperspectral images based on an adaptive support vector method. *IEEE Geoscience and Remote Sensing Letters,* July 2011, vol. 8 (4), 646-650
- **P. EVANGELISTA ; M. EMBRECHTS ; B. SZYMANSKI.** *Some properties of the Gaussian kernel for one class learning,* 2007, vol. 09, 269-278
- **H. WANG ; L. ZHANG ; Y. XIAO ; W. XU.** An approach to choosing Gaussian kernel parameter for one-class svms via tightness detecting. *2012 4th International Conference on Intelligent Human-Machine Systems and Cybernetics,* August 2012, vol. 2, 318-323